# EUROPÄISCHE PATENTSCHRIFT

(11) **EP 1 635 144 B1**
(45) Veröffentlichungstag und Bekanntmachung des Hinweises auf die Patenterteilung: **18.04.2007**
(21) Anmeldenummer: 05107547.1
(22) Anmeldetag: 17.08.2005
(51) Int. Cl.: G01C 21/36

(54) **Verfahren zur adaptiven Routenführung und adaptives Routenführungssystem**
Method of and system for adaptive route guidance
Procédé et système de guidage routier adaptif

(30) Priorität: 10.09.2004 DE 102004043861
(43) Veröffentlichungstag der Anmeldung: 15.03.2006
(73) Patentinhaber: SIEMENS AKTIENGESELLSCHAFT, 80333 München (DE)
(72) Erfinder: Belhoula, Abdelkarim, 35614, Asslar (DE); Ruehl, Hans-Wilhelm, 35606, Solms (DE); Schreiter, Gerd, 35781, Weilburg (DE)

(56) Entgegenhaltungen:
- DE-A1- 19 537 255
- US-A- 5 177 685
- PATENT ABSTRACTS OF JAPAN Bd. 2000, Nr. 09, 13. Oktober 2000 (2000-10-13) -& JP 2000 161969 A (FUJITSU TEN LTD), 16. Juni 2000 (2000-06-16)

## Beschreibung

Die Erfindung betrifft ein Verfahren und ein Routenführungssystem zur Routenführung eines Fahrzeugs, insbesondere eines Kraftfahrzeugs, bei denen ein Fahrzeugführer durch grafische und/oder akustische Ausgabe von Leithinweisen entlang einer vorab geplanten Route geleitet wird, wobei die Art der Darstellung der Leithinweise in Abhängigkeit von einem Fahrsituationsmodell verändert wird und das Fahrsituationsmodell den aktuellen Zustand des Fahrzeugs und der Fahrzeugumgebung sowie das Verhalten des Fahrzeugführers berücksichtigt.

Ein derartiges Routenführungssystem ist aus der US-A-5177685 bekannt, wobei die Leithinweise dort akustisch ausgegeben werden und beispielsweise an die aktuelle Fahrzeuggeschwindigkeit und -beschleunigung, den Abstand zur nächsten Straßenkreuzung, den aktuellen Reibkoeffizienten zur Straße oder die Reaktionszeit des Fahrzeugführers angepasst sind.

Routenführungssysteme werden heute für verschiedene Anwendungen genutzt: zur Navigation eines Kraftfahrzeugs innerhalb eines Straßennetzes, zur Führung von Schiffen auf Gewässern oder auch um Wanderern oder Radfahrern den besten Weg abseits der Autostraßen zu weisen.

Dabei ist das Routenführungssystem entweder selbst in der Lage, eine Route von einem Start- zu einem Zielort zu planen, oder es verarbeitet lediglich vorausberechnete Routen, die von einem Routenplanungssystem auf das Routenführungssystem übertragen werden. Der Vorgang der Routenführung läuft dann so ab, dass mittels einer Positionssensorik der aktuelle Standort des Fahrzeugs ermittelt und mit der Route verglichen wird und dass das nächste auszuführende Fahrmanöver, wie Abbiegen, Wenden oder Spur wechseln, in Form eines Leithinweises an den Fahrzeugführer akustisch und/oder grafisch ausgegeben wird. Die Leithinweise können dabei auf nur wenige Informationen beschränkt sein, wie beispielsweise eine Darstellung der Fahrtrichtung bzw. Fahrtrichtungsänderung in Verbindung mit einer Entfernungsangabe, oder sie können viele Zusatzinformationen enthalten, indem beispielsweise der Leithinweis auf einer zwei- oder dreidimensionalen Karte eingeblendet wird, wobei neben der zu fahrenden Route auch noch Sehenswürdigkeiten, Straßennamen, Hotels und Tankstellen angezeigt werden.

Die Art der Darstellung der Leithinweise wird heute hauptsächlich vom Fahrzeugführer durch Menüeinstellungen vorgegeben, d. h. er gibt per Eingabeeinheit vor, ob er die Leithinweise akustisch und/oder visuell erhalten will, ob er im grafischen Ausgabemodus eine Symboldarstellung oder eine Anzeige der Karte wünscht, in welchem Maßstab die Karte angezeigt werden soll und ob und welche Points of Interest (POI), wie Parkplätze, Hotels, Tankstellen, Bankautomaten, Sehenswürdigkeiten etc., zu sehen sind. Die damit vorgegebene statische Art der Darstellung von Leithinweisen reicht nicht in jedem Fall dazu aus, den Fahrzeugführer ausreichend zu informieren bzw. bietet unter manchen Umständen zu viele Informationen an.

Um eine Überforderung oder übermäßige Ablenkung des Fahrzeugführers vom Verkehrsgeschehen zu vermeiden, schlägt die DE-A-102 55 436 ein Fahrerassistenzsystem vor, welches Mittel zur Bestimmung eines Belastungszustandes des Fahrzeugführers aufweist und bei dem in Abhängigkeit vom Belastungszustand die Informationsausgabe und die Bedienung des Fahrerassistenzsystems gesteuert wird. Der Belastungszustand wird von einer Fahrerzustandserkennung ermittelt, die aus verschiedenen Mess- und Zustandsdaten, wie beispielsweise Beschleunigung und Geschwindigkeit, Betriebszustand von Scheibenwischer oder Nebelschlussleuchte, Straßentyp, Kurvenverlauf, Körpertemperatur oder Hautoberflächenleitfähigkeit, Rückschlüsse auf die aktuelle Anforderung an den Fahrer schließt.

Aus der DE-C-198 54 399 ist ein adaptives Navigationssystem bekannt, welches die Ortskenntnisse des Fahrers bei der Ausgabe von Navigationshinweisen dahingehend berücksichtigt, dass er auf bekannten Routen wenig oder keine Hinweise erhält.

Die DE-A-198 15 035 offenbart ein Verfahren und eine Vorrichtung zur Darstellung von Informationen für ein Navigationsgerät, mit denen der Maßstab eines darzustellenden Kartenabschnittes adaptiv in Abhängigkeit von der Entfernung zu einem nächsten Entscheidungs- bzw. Orientierungspunkt, wie beispielsweise einer Kreuzung oder Autobahnabfahrt, dargestellt werden kann.

In der DE 195 37 255 A1 ist ein Navigationsgerät beschrieben, bei dem der Maßstab der dargestellten Straßenkarte in Abhängigkeit der aktuellen Fahrgeschwindigkeit verändert wird.

Die bekannten Verfahren berücksichtigen jeweils Einzelaspekte, um die Darstellung von Navigationsinformationen an diese Einzelaspekte anzupassen.

Aufgabe der vorliegenden Erfindung ist es, ein Verfahren und ein Routenführungssystem der eingangs genannten Art anzugeben, um stets eine optimal angepasste Darstellung von Leithinweisen zu ermöglichen.

Diese Aufgabe wird mit einem Verfahren nach Anspruch 1 und einem Routenführungssystem nach Anspruch 12 gelöst.

Bei dem Verfahren nach Anspruch 1 wird die Art der Darstellung der Leithinweise in Abhängigkeit von einem Fahrsituationsmodell verändert, wobei das Fahrsituationsmodell den aktuellen Zustand des Fahrzeugs und der Fahrzeugumgebung sowie das Verhalten des Fahrzeugführers berücksichtigt.

Das Fahrsituationsmodell bildet also die gesamte Situation in und um das Fahrzeug ab, so dass nicht mehr nur nach Einzelkriterien sondern aufgrund eines umfassenden Abbildes der Fahrsituation entschieden werden kann, in welcher Form die Leithinweise ausgegeben werden sollen, um den Fahrer einerseits umfassend zu informieren jedoch andererseits nicht zu überfordern. Der aktuelle Zustand des Fahrzeugs wird dabei hauptsächlich aus Sensorinformationen gewonnen, die den Zustand der Bewegung, also Position, Geschwindigkeit und Beschleunigung, sowie den Zustand der Aggregate des Fahrzeugs, wie Tankinhalt, Batterieladezustand, Reifenluftdruck oder Rückmeldungen vom Motormanagement, wiedergeben. Der aktuelle Zustand der Fahrzeugumgebung wird ebenfalls aus Sensorinformationen gewonnen, wie beispielsweise von einem Regen- und Temperatursensor, einem Videosensor, einem Verkehrsdichtemesser oder von Abstandssensoren. Zusätzlich können Informationen aus einer Karte genutzt werden, beispielsweise über Straßentyp, Krümmung, Steigung, Anzahl der Fahrspuren und Abstand zur nächsten Kreuzung.

Das Verhalten des Fahrzeugführers wird anhand seiner aktuellen Aktivitäten ermittelt, beispielsweise über die Heftigkeit von Lenkbewegungen oder die Anzahl von Spurwechseln im Vergleich zum Straßenverlauf. Weiterhin gehört zum aktuellen Verhalten des Fahrzeugführers, ob er momentan ausschließlich mit der Führung des Fahrzeugs oder noch mit Nebentätigkeiten, wie Telefonieren oder Bedienen von Zusatzgeräten, beschäftigt ist. Auch können Informationen über die Betätigung von solchen Zusatzgeräten herangezogen werden, die die Stimmung des Fahrers, seinen körperlichen Zustand oder die Atmosphäre im Fahrzeuginnenraum beeinflussen. Solche Zusatzgeräte sind beispielsweise die Klimaanlage oder Musik- und Multimediageräte. Biometrische Messungen, wie Temperatur, Puls oder Augenbewegungen des Fahrzeugführers, werden zwar momentan in Fahrzeugen weniger vorgenommen, könnten aber zukünftig ebenfalls für Rückschlüsse auf das Fahrerverhalten dienen.

Erfindungsgemäß werden die möglichen Darstellungen der Leithinweise einzelnen Darstellungskonzepten zugeordnet. Ein Darstellungskonzept ist dadurch gekennzeichnet, dass ein primärer Parameter gewählt wird, in Abhängigkeit dessen die Darstellung hauptsächlich geändert wird und dass in Abhängigkeit von weiteren, zu dem Darstellungskonzept passenden, sekundären Parametern Abwandlungen dieser Änderungen herbeigeführt werden. Ein Beispiel dafür ist ein straßen-orientiertes Darstellungskonzept, bei dem die Leithinweise primär an den Straßentyp, wie Autobahn, Landstraße oder Feldweg, angepasst werden. Als sekundäre Parameter dienen die Straßenkrümmung, die erlaubte Höchstgeschwindigkeit der Straße oder der Abstand zum nächsten markanten Routenpunkt, wobei ein markanter Routenpunkt eine Kreuzung, ein POI oder ein Abbiegepunkt ist.

Gemäß der Erfindung ist eines der Darstellungskonzepte ein informationsdichte-orientiertes Darstellungskonzept, dessen primärer Parameter die Anzahl der als nächstes auftretenden markanten Routenpunkte ist. Als sekundäre Parameter kommen die Dichte der Bebauung, die Dichte der POI's oder die Anzahl der darzustellenden Verkehrsmeldungen hinzu.

Weitere mögliche Darstellungskonzepte sind eine geschwindigkeits-orientierte Darstellung, mit der Fahrzeuggeschwindigkeit als primärem Parameter und dem Abstand zum nächsten markanten Routenpunkt, der Anzahl der Spuren und der Verkehrsdichte als sekundären Parametern, oder eine planungstiefeorientierte Darstellung, mit der Anzahl an voraus liegenden Abbiegemanövern bzw. Fahrtrichtungsänderungen als primärem Parameter und beispielsweise der Anzahl der anzusteuernden POI's oder Zwischenziele als sekundärem Parameter.

Die Wahl eines bestimmten Darstellungskonzeptes, die entweder automatisch oder durch den Fahrzeugführer erfolgen kann, erlaubt eine Eingrenzung der Änderungsmöglichkeiten der Darstellung, wodurch insbesondere eine Abruptheit der Änderungen vermieden wird. Ändert man die Darstellung in Abhängigkeit von nur einem Parameter, so wird dies in aller Regel allmählich ablaufen. Dagegen kann der gleichwertige Einfluss mehrerer Parameter zu sehr schnellen und starken Änderungen der Darstellung führen. Gehen jedoch die weiteren Parameter nur noch sekundär und damit abgeschwächt ein, so bleibt die Allmählichkeit erhalten und für den Fahrer ergibt sich eine natürlich wirkende Anpassung der Darstellungsart, die er im besten Fall gar nicht als Änderung wahrnimmt.

In einer Ausgestaltung der Erfindung wird das Verhalten des Fahrzeugführers nicht nur von seinem aktuellen Verhalten abgeleitet, sondern es wird auch die Fahrerintention berücksichtigt, d. h. der Hintergrund der Routenführung wird betrachtet. Aus einem Vergleich zwischen der aktuellen Route und abgespeicherten, früheren Routen kann beispielsweise darauf geschlossen werden, ob die Fahrstrecke für den Fahrer eine unbekannte, eine selten befahrene oder gar Routine ist. Die Fahrerintention beinhaltet auch den Zweck der Reise, also ob es sich um eine touristische Rundfahrt handelt, bei der verschiedenste Sehenswürdigkeiten angesteuert werden oder ob ein enger Terminplan eingehalten werden muss, d. h. ob die Route mit ihren Zwischenzielen aus einem Terminkalender heraus erstellt wurde.

Die Berücksichtigung der Fahrerintention ermöglicht eine noch bessere Anpassung der Darstellung der Leithinweise an die Bedürfnisse des Fahrers. So können bei einer touristischen Rundreise Hintergrundinformationen zur aktuellen Landschaft oder passende POI's, z.B. Restaurants, angezeigt werden. Bei einem engen Terminplan wird der Fahrzeugführer konzentriert, eventuell sogar angespannt sein und wenig Ablenkung wünschen. Der Inhalt der Leithinweise wird dann auf ein schnell erfassbares Format gebracht und die weniger wichtigen Zusatzinformationen wie POI's oder Namen von Nebenstraßen werden weggelassen.

Neben den Zuständen von Fahrzeug und Fahrzeugumgebung sowie dem Verhalten des Fahrzeugführers gehen in einer weiteren Ausgestaltung in das Fahrsituationsmodell die Informationen eines Fahrerpräferenzmodells ein. Das Fahrerpräferenzmodell beinhaltet Vorgaben des Fahrzeugführers zur gewünschten Darstellung der Leithinweise. Diese Vorgaben können genereller Natur sein, vergleichbar mit den heute möglichen statischen Einstellungen, sie können jedoch auch jeweils mit einer oder mehreren Zusatzinformationen verknüpft sein, beispielsweise dem gerade gefahrenen Geschwindigkeitsbereich oder der gerade gleichzeitig erfolgenden Benutzung des Telefons über die Freisprechanlage. Durch Hinzuziehung eines Fahrerpräferenzmodells wird die Anpassung der Leithinweise an die Fahrsituation individualisiert.

In einer weiteren Ausgestaltung geht in das Fahrsituationsmodell der aktuelle Status der Routenführung ein, also ob man sich kurz vor Fahrtantritt, während der normalen Routenverfolgung, bei einem Umleitungs- oder Umplanungsmanöver oder kurz vor dem Ziel befindet. Auch diese Zusatzinformation erlaubt eine verbesserte Anpassung der dargestellten Leithinweise an die aktuelle Fahrsituation.

In einer Weiterbildung der Erfindung werden jedem Darstellungskonzept eigene Fahrerpräferenzen zugeordnet. So werden bei dem straßen-orientierten Darstellungskonzept die vom Fahrzeugführer in einer bestimmten Fahrsituation gewählten Einstellungen, wie Lautstärke, Schriftgröße oder Kartenmaßstab, mit dem jeweils befahrenen Straßentyp verknüpft und beim nächsten Befahren dieses Straßentyps als Voreinstellungen gewählt. Beim informationsdichte-orientierten Darstellungskonzept werden die Fahrerpräferenzen mit der Anzahl der markanten Routenpunkte verbunden, die zum Zeitpunkt der Wahl der Einstellung in einer vorgegebenen Entfernung vor dem Fahrzeug liegen. Bei der geschwindigkeits-orientierten Darstellung erfolgt die Verknüpfung mit der Fahrzeuggeschwindigkeit und bei der planungstiefe-orientierten Darstellung mit der Anzahl der in einer bestimmten Entfernung voraus liegenden Fahrmanöver.
Eine solche Verknüpfung der Fahrerpräferenzen mit dem Darstellungskonzept ermöglicht eine Individualisierung der Darstellungskonzepte. So werden sich verschiedene Fahrzeugführer von gleichen Fahrsituationen unterschiedlich stark gefordert fühlen. Beispielsweise ist es möglich, dass ein Fahrer auf Autobahnen zusätzlich eingeblendete POI's wie Raststätten und Tankstellen wünscht, während einem anderen diese Informationen bereits zuviel sind. Oder in der Innenstadt wünscht ein Fahrer auch bei sehr schnell aufeinander folgenden Abzweigungen und Kreuzungen stets nur die Information über den nächsten markanten Routenpunkt, während ein zweiter möglichst den Überblick haben möchte und mehrere markante Routenpunkte gleichzeitig sehen will.

Die Erfindung wird nachfolgend anhand eines Ausführungsbeispiels und der Zeichnung näher erläutert. Es zeigen:
- Fig. 1: ein Routenführungssystem zur adaptiven Routenplanung;
- Fig. 2: eine Übersicht der an das Fahrsituationsmodell Informationen liefernden Informationsgruppen;
- Fig. 3: eine Informationsgruppe Fahrzeug;
- Fig. 4: eine Informationsgruppe Fahrer;
- Fig. 5: eine Informationsgruppe Fahrzeugumgebung;
- Fig. 6: eine Informationsgruppe Darstellungskonzept;
- Fig. 7: eine Informationsgruppe Fahrerpräferenz;
- Fig. 8: eine Informationsgruppe Status der Routenführung.

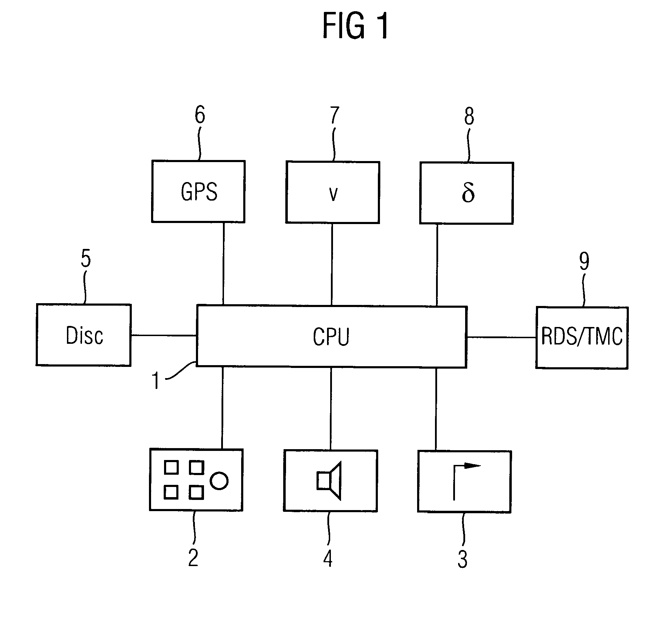

In Figur 1 ist ein Routenführungssystem für ein Kraftfahrzeug dargestellt mit einer Recheneinheit 1, die verbunden ist mit einer Eingabeeinheit 2, einer grafischen Ausgabeeinheit 3, einer akustischen Ausgabeeinheit 4, einer Speichereinheit 5, einem Positionsbestimmungsmodul 6, einem Modul zur Geschwindigkeitsbestimmung 7, einem Lenkwinkelsensor 8 und einem Modul zum Empfang von Verkehrsmeldungen 9.

In der Speichereinheit 5 sind eine vorab geplante Route sowie eine Straßenkarte abgelegt, wobei das Routenführungssystem den Fahrzeugführer innerhalb der Straßenkarte entlang der Route leiten soll.

Zum Zweck der Routenführung wird in bekannter Weise mittels des Positionsbestimmungsmoduls 6 und im Abgleich mit der Straßenkarte die aktuelle Lage des Fahrzeugs zur Route ermittelt. Das nächste vom Fahrer auszuführende Fahrmanöver wird bestimmt und dem Fahrer rechtzeitig akustisch und/oder visuell in Form eines Leithinweises angezeigt. Sofern über das Modul zum Empfang von Verkehrsmeldungen 9 Informationen über Staus oder Baustellen eingehen, wird dies dem Fahrer mitgeteilt bzw., sofern die Recheneinheit 1 ebenfalls zur Routenplanung ausgelegt ist, es wird eine den Stau umgehende Route geplant.

Der Lenkwinkelsensor, der beispielsweise durch ein im Fahrzeug verfügbares ESP-System ohnehin vorhanden sein kann, dient der Erkennung des aktuellen Verhaltens des Fahrers.

Die Darstellung der Leithinweise erfolgt in dem Routenführungssystem adaptiv, d. h. angepasst an die von der Recheneinheit 1 mittels eines Fahrsituationsmodells 10 ermittelten Darstellungsparameter 11. In das Fahrsituationsmodell 10 gehen dabei der aktuelle Zustand des Fahrzeugs 12 und der Fahrzeugumgebung 13 sowie das Verhalten des Fahrers 14 ein.

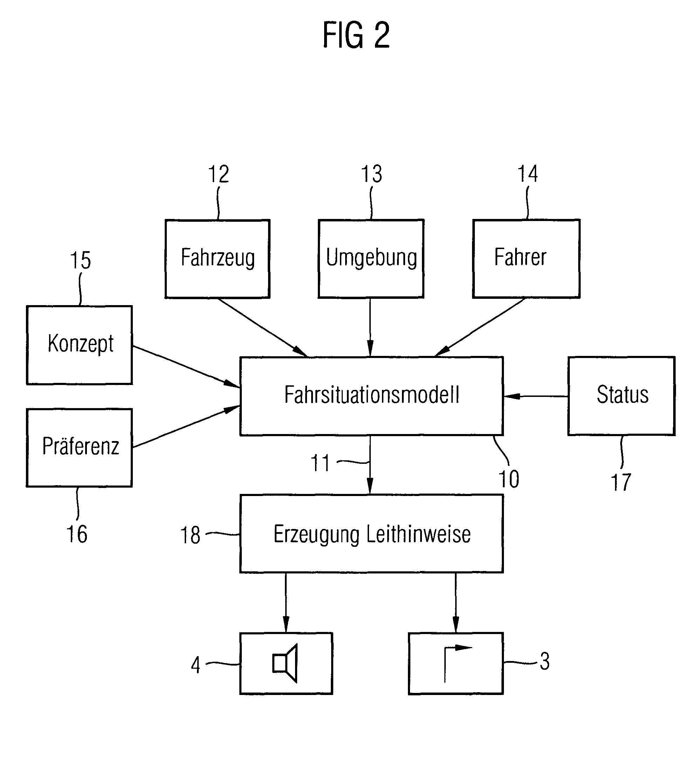

Wie Figur 2 zu entnehmen ist, wird das Fahrsituationsmodell 10 noch mit weiteren Informationen versorgt, und zwar mit Informationen über das gewünschte Darstellungskonzept 15, Informationen aus einem Fahrerpräferenzmodell 16 sowie dem Status der Routenführung 17. Die in dem Modul 18 erfolgende Erzeugung von Leithinweisen stellt die Umsetzung der vom Fahrsituationsmodell vorgegebenen Darstellungsparameter in die physikalischen Ansteuergrößen der akustischen und der grafischen Ausgabeeinheit 4 und 3 dar.

Die vom Fahrsituationsmodell 10 ausgegebenen Darstellungsparameter 11 enthalten Angaben darüber, ob die Darstellung der Leithinweise ausschließlich akustisch oder ausschließlich grafisch oder auf beiden Ausgabeeinheiten erfolgen soll und in welcher Weise dann die Leithinweise auf die akustische und grafische Ausgabeeinheit aufgeteilt werden sollen. So können beispielsweise Abbiegehinweise ausschließlich akustisch ausgegeben werden, während grafisch lediglich die Position des Fahrzeugs auf der Route angezeigt wird. Weitere Darstellungsparameter 11 sind Angaben über die Lautstärke, die Schriftgröße, den Kartenmaßstab, den Zeitpunkt bzw. die Entfernung vor dem nächsten Fahrmanöver, zu denen der nächste Leithinweis ausgegeben werden soll, über einen Wechsel zwischen Symbol- und Kartendarstellung, die Ausrichtung der Karte, die Ein- oder Ausblendung von nebengeordneten Informationen wie Straßennamen oder POI's, die Ein- oder Ausblendung nebengeordneter Straßentypen sowie die Einstellung der Tag- oder Nachtdarstellung der Grafik. Diese Aufzählung ist nicht abschließend.

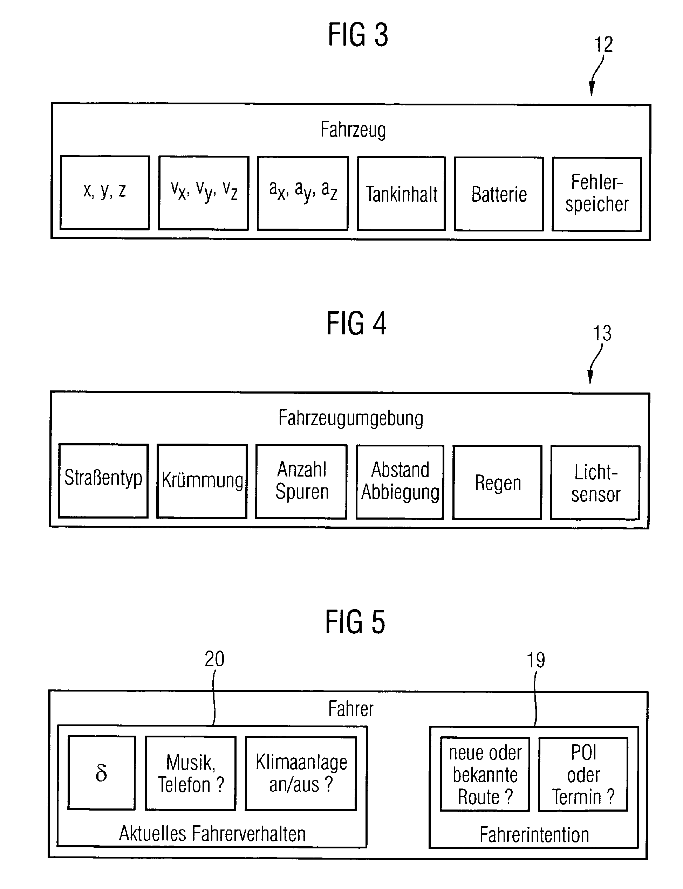

Das Fahrsituationsmodell 10 des Routenführungssystems aus Figur 1 wird von mehreren so genannten Informationsgruppen mit Informationen versorgt. Die drei wesentlichen Informationsgruppen sind das Fahrzeug, die Fahrzeugumgebung und der Fahrer, wie in den Figuren 3 bis 5 dargestellt. Aus diesen drei Informationsgruppen werden der jeweils aktuelle Zustand des Fahrzeugs und der Fahrzeugumgebung sowie das Verhalten des Fahrers entnommen.

Der aktuelle Zustand des Fahrzeugs 12, zu sehen in Figur 3, wird gebildet aus den Informationen des Positionsbestimmungsmoduls 6 über die Koordinaten x, y und z des Fahrzeugs. Mit dem Modul zur Geschwindigkeitsbestimmung 7 sowie aus den Ableitungen der drei Positionskoordinaten werden die weiteren Bewegungsgrößen der Geschwindigkeit vₓ, v_{y} und v_{z} sowie der Beschleunigung aₓ, a_{y} und a_{z} ermittelt. Weitere Informationen über den Zustand des Fahrzeugs werden aus Sensorinformationen über den Tankinhalt, den Ladezustand der Batterie sowie aus dem Inhalt des im Bordcomputer abgelegten Fehlerspeichers gewonnen.

Der in Figur 4 dargestellten Zustand der Fahrzeugumgebung 13 bestimmt sich über die Informationen aus der Straßenkarte über den aktuellen Straßentyp, die Straßenkrümmung, die Anzahl der Fahrspuren sowie den Abstand zum nächsten Abbiegepunkt. Weitere Informationen werden über einen Regen- und einen Lichtsensor geliefert.

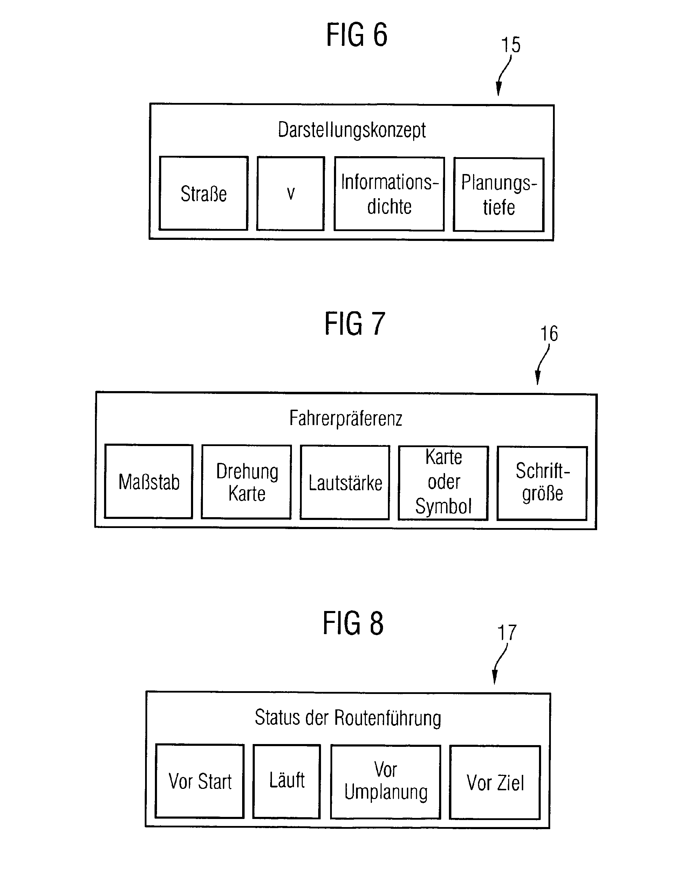

Das Verhalten des Fahrers 14 setzt sich entsprechend Figur 5 zusammen aus dem aktuellen Fahrerverhalten 20, welches über den Lenkwinkel δ, den Schaltzustand der Klimaanlage sowie über die mögliche Benutzung oder Bedienung von Nebengeräten wie Musikanlage und Telefon bestimmt wird, sowie aus der Fahrerintention 19, die anhand der Tatsachen, ob eine neue oder eine bekannte Route befahren wird und ob ein oder mehrere POI's angesteuert oder einer von mehreren Terminen des Tages erreicht werden sollen, ermittelt wird.

Das Darstellungskonzept 15 aus Figur 6 wird entweder vom Fahrer vor Befahren der Route ausgewählt oder vom Routenführungssystem automatisch vorgegeben, beispielsweise in Abhängigkeit vom zuletzt gewählten Darstellungskonzept. Die verwendeten Darstellungskonzepte sind ein straßen-orientiertes, ein geschwindigkeits-orientiertes, ein informationsdichte-orientiertes und ein planungstiefe-orientiertes Konzept.

Die zur Informationsgruppe der Fahrerpräferenz 16 gehörenden Einzelinformationen sind in Figur 7 abgebildet. Das Fahrsituationsmodell gibt zwar Darstellungsparameter vor, die die Art der Darstellung der Leithinweise bestimmen, jedoch kann der Fahrer diese vorgegebene Darstellung jederzeit an seine Wünsche anpassen. Dementsprechend werden von den vom Fahrer gewählten Einstellungen abgespeichert der Kartenmaßstab, die Ausrichtung der Karte - beispielsweise feststehend in Nordrichtung oder sich mit der Orientierung des Fahrzeugs mitdrehend - , die Lautstärke, die Schriftgröße und ob eine Karten- oder Symboldarstellung bevorzugt oder beides gleichzeitig angezeigt werden soll. Die jeweiligen Einstellungen werden passend zum aktuellen Darstellungskonzept mit zusätzlichen Parameterwerten wie aktueller Straßentyp oder aktueller Geschwindigkeitsbereich, um beim erneuten Erreichen dieser Parameterwerte wieder dieselben Darstellungsparameter einstellen zu können.

Die Informationsgruppe Status der Routenführung 17, dargestellt in Figur 8, liefert zusätzlich Informationen über den aktuellen Betriebszustand der Routenführung. Unterschieden wird zwischen den Zuständen: vor dem Start der Routenführung, Routenführung läuft, Umplanung erforderlich und vor dem Ziel.

## Patentansprüche

1. Verfahren zur Routenführung eines Fahrzeugs, insbesondere eines Kraftfahrzeugs, bei dem ein Fahrzeugführer durch grafische und/oder akustische Ausgabe von Leithinweisen entlang einer vorab geplanten Route geleitet wird, wobei die Art der Darstellung der Leithinweise in Abhängigkeit von einem Fahrsituationsmodell (10) verändert wird und das Fahrsituationsmodell (10) den aktuellen Zustand des Fahrzeugs (12) und der Fahrzeugumgebung (13) sowie das Verhalten des Fahrzeugführers (14) berücksichtigt, **dadurch gekennzeichnet, dass** die Darstellung der Leithinweise gemäß einem Darstellungskonzept (15) erfolgt, welches aus mehreren Darstellungskonzepten wählbar ist und welches durch einen primären Parameter **gekennzeichnet** ist, in Abhängigkeit dessen die Darstellung hauptsächlich geändert wird, wobei eines der mehreren Darstellungskonzepte ein informationsdichte-orientiertes, grafisches Darstellungskonzept ist mit der Anzahl der auf der Route voraus liegenden markanten Routenpunkte als primärem Parameter.

2. Verfahren nach Anspruch 1, **dadurch gekennzeichnet, dass** eines der mehreren Darstellungskonzepte ein straßenorientiertes Darstellungskonzept ist mit dem Straßentyp als primärem Parameter.

3. Verfahren nach einem der Ansprüche 1 oder 2, **dadurch gekennzeichnet, dass** eines der mehreren Darstellungskonzepte ein geschwindigkeitsorientiertes Darstellungskonzept ist mit der Fahrzeuggeschwindigkeit als primärem Parameter.

4. Verfahren nach zumindest einem der vorhergehenden Ansprüche, **dadurch gekennzeichnet, dass** eines der mehreren Darstellungskonzepte ein planungstiefe-orientiertes Darstellungskonzept ist mit der Anzahl an voraus liegenden Fahrtrichtungsänderungen als primärem Parameter.

5. Verfahren nach zumindest einem der vorhergehenden Ansprüche, **dadurch gekennzeichnet, dass** die Änderung der Darstellung der Leithinweise in Abhängigkeit von zu dem gewählten Darstellungskonzept (15) passenden, sekundären Parametern abgewandelt wird.

6. Verfahren nach zumindest den Ansprüchen 1 und 5, **dadurch gekennzeichnet, dass** als sekundäre Parameter die Dichte der Bebauung und/oder die Dichte der Points of Interest und/oder die Anzahl der darzustellenden Verkehrsmeldungen berücksichtigt werden.

7. Verfahren nach zumindest den Ansprüchen 2 und 5, **dadurch gekennzeichnet, dass** als sekundäre Parameter die Straßenkrümmung und/oder die erlaubte Höchstgeschwindigkeit und/oder der Abstand zum nächsten markanten Routenpunkt berücksichtigt werden.

8. Verfahren nach zumindest einem der vorhergehenden Ansprüche, **dadurch gekennzeichnet, dass** beim Verhalten des Fahrzeugführers (14) das aktuelle Verhalten sowie die Fahrerintention (19) berücksichtigt werden.

9. Verfahren nach zumindest einem der vorhergehenden Ansprüche, **dadurch gekennzeichnet, dass** in das Fahrsituationsmodell (10) weiterhin Informationen eines Fahrerpräferenzmodells (16) eingehen.

10. Verfahren nach Anspruch 9, **dadurch gekennzeichnet, dass** jedem Darstellungskonzept (15) eigene Fahrerpräferenzen (16) zugeordnet sind.

11. Verfahren nach zumindest einem der vorhergehenden Ansprüche, **dadurch gekennzeichnet, dass** in das Fahrsituationsmodell (10) weiterhin der aktuelle Status der Routenführung (17) eingeht.

12. Routenführungssystem für ein Fahrzeug, insbesondere für ein Kraftfahrzeug, mit einer Recheneinheit (1) und einer mit der Recheneinheit (1) verbundenen grafischen und/oder akustischen Ausgabeeinheit (3, 4), mit dem ein Fahrzeugführer durch Ausgabe von Leithinweisen auf der grafischen und/oder akustischen Ausgabeeinheit (3, 4) entlang einer vorab geplanten Route geleitet wird, wobei die Recheneinheit (1) die Art der Darstellung der Leithinweise in Abhängigkeit von einem von ihm ermittelten Fahrsituationsmodell (10) verändert, wobei das Fahrsituationsmodell (10) den aktuellen Zustand des Fahrzeugs (12) und der Fahrzeugumgebung (13) sowie das Verhalten des Fahrzeugführers (14) berücksichtigt, **dadurch gekennzeichnet, dass** die Recheneinheit (1) die Leithinweise gemäß einem Darstellungskonzept (15) ausgibt, welches aus mehreren Darstellungskonzepten wählbar ist und welches durch einen primären Parameter **gekennzeichnet** ist, in Abhängigkeit dessen die Recheneinheit (1) eine Änderung der Darstellung hauptsächlich vornimmt, wobei eines der mehreren Darstellungskonzepte ein informationsdichte-orientiertes, grafisches Darstellungskonzept ist mit der Anzahl der auf der Route voraus liegenden markanten Routenpunkte als primärem Parameter.

## Claims

1. Method for navigation of a vehicle, in particular a motor vehicle, wherein a vehicle driver is guided along a previously planned route by graphic and/or acoustic output of guidance advice, the nature of the presentation of the guidance advice being changed depending on a driving situation model (10), and the driving situation model (10) taking into account the current state of the vehicle (12) and the vehicle's environment (13), as well as the vehicle driver's s behaviour (14), **characterized in that** the guidance advice is presented according to a presentation concept (15), which can be chosen from several presentation concepts and which is **characterized by** a primary parameter, depending on which the presentation is chiefly changed, one of the several presentation concepts being a graphic presentation concept oriented on the information density, with the number of distinct route points on the road ahead as the primary parameter.

2. Method according to Claim 1, **characterized in that** one of the several presentation concepts is a road-oriented presentation concept, with the road type as the primary parameter.

3. Method according to one of Claims 1 and 2, **characterized in that** one of the several presentation concepts is a speed-oriented presentation concept, with the vehicle speed as the primary parameter.

4. Method according to at least one of the preceding claims, **characterized in that** one of the several presentation concepts is a presentation concept oriented on planning depth, with the number of changes in the direction of travel to come as the primary parameter.

5. Method according to at least one of the preceding claims, **characterized in that** the change of the presentation of the guidance advice is varied depending on secondary parameters matching the chosen presentation concept (15).

6. Method according to at least Claims 1 and 5, **characterized in that** the building density and/or the density of the POIs and/or the number of traffic messages to be presented are taken into account as secondary parameters.

7. Method according to at least Claims 2 and 5, **characterized in that** the curvature of the road and/or the maximum permitted speed and/or the distance to the next distinct route point are taken into account as secondary parameters.

8. Method according to at least one of the preceding claims, **characterized in that** for the behaviour of the vehicle driver (14), the current behaviour and also the driver's intention (19) are taken into account.

9. Method according to at least one of the preceding claims, **characterized in that** information about a driver preference model (16) further goes into the driving situation model (10).

10. Method according to Claim 9, **characterized in that** separate driver preferences (16) are assigned to each presentation concept (15).

11. Method according to at least one of the preceding claims, **characterized in that** the current status of the navigation (17) further goes into the driving situation model (10).

12. Navigation system for a vehicle, in particular for a motor vehicle, with a computing unit (1) and a graphic and/or acoustic output unit (3, 4) connected to the computing unit (1), with which navigation system a vehicle driver is guided along a previously planned route by output of guidance advice on the graphic and/or acoustic output unit, the computer unit (1) changing the nature of the presentation of the guidance advice depending on a driving situation model (10) it has determined, the driving situation model (10) taking into account the current state of the vehicle (12) and the vehicle's environment (13) as well as the vehicle driver's behaviour (14), **characterized in that** the computing unit (1) outputs the guidance advice according to a presentation concept (15), which can be chosen from several presentation concepts and which is **characterized by** a primary parameter, depending on which the computing unit (1) chiefly makes a change to the presentation, one of the several presentation concepts being a graphic presentation concept oriented on the information density with the number of distinct route points on the road ahead as the primary parameter.

## Revendications

1. Procédé de pilotage d'un véhicule sur itinéraire, notamment d'un véhicule automobile, dans lequel un conducteur de véhicule est guidé, par édition graphique et/ou acoustique d'indications de pilotage, le long d'un itinéraire planifié auparavant, où le mode de représentation des indications de pilotage varie en fonction d'un schéma de situation de conduite (10) et où le schéma de situation de conduite (10) tient compte de l'état actuel (12) du véhicule et de l'environnement (13) du véhicule, ainsi que du comportement du conducteur de véhicule (14), **caractérisé par le fait que** la représentation des informations de pilotage se fait conformément à un plan de représentation (15), qui peut être sélectionné parmi plusieurs plans de représentation et qui est **caractérisé par** un paramètre primaire en fonction duquel se fait la modification principale de la représentation, où l'un des plusieurs plans de représentation est un plan de représentation graphique orienté vers la densité des informations avec, en tant que paramètre primaire, le nombre de points marquants de l'itinéraire qui se trouvent devant le véhicule.

2. Procédé selon la revendication 1, **caractérisé par le fait que** l'un des plusieurs plans de représentation est un plan de représentation orienté vers les routes avec, en tant que paramètre primaire, le type de route.

3. Procédé selon la revendication 1 ou 2, **caractérisé par le fait que** l'un des plusieurs plans de représentation est un plan de représentation orienté vers la vitesse avec, en tant que paramètre primaire, la vitesse du véhicule.

4. Procédé selon au moins l'une des revendications précédentes, **caractérisé par le fait que** l'un des plusieurs plans de représentation est un plan de représentation orienté vers la profondeur de planification avec, en tant que paramètre primaire, le nombre de changements de direction de marche qui se trouvent devant le véhicule.

5. Procédé selon au moins l'une des revendications précédentes, **caractérisé par le fait que** la modification de la représentation des informations de pilotage est transformée en fonction de paramètres secondaires adaptés au plan de représentation sélectionné.

6. Procédé selon au moins l'une des revendications 1 et 5, **caractérisé par le fait qu**'on tient compte, en tant que paramètre secondaire, de la densité de l'urbanisation et/ou de la densité des points de référence ou points d'intérêt et/ou du nombre de messages relatifs au trafic routier à représenter.

7. Procédé selon au moins l'une des revendications 2 et 5, **caractérisé par le fait qu**'on tient compte, en tant que paramètre secondaire, des virages de la route et/ ou de la vitesse maximum autorisée et/ou de la distance du prochain point marquant de l'itinéraire.

8. Procédé selon au moins l'une des revendications précédentes, **caractérisé par le fait qu'**on tient compte, pour le comportement du conducteur (14), de son comportement actuel, ainsi que de l'intention du conducteur (19).

9. Procédé selon au moins l'une des revendications précédentes, **caractérisé par le fait que**, en outre, des informations d'un modèle préférentiel (16) du conducteur sont prises en compte dans le schéma de situation de conduite (10).

10. Procédé selon la revendication 9, **caractérisé par le fait que** des préférences (16) propres au conducteur sont affectées à chaque plan de représentation (15).

11. Procédé selon au moins l'une des revendications précédentes, **caractérisé par le fait que**, en outre, le statut actuel du pilotage sur itinéraire (17) est pris en compte dans le schéma de situation de conduite (10).

12. Système de pilotage d'un véhicule sur itinéraire, notamment d'un véhicule automobile, comportant une unité de calcul (1) et une unité de sortie (3, 4), graphique et/ou acoustique, reliée à l'unité de calcul (1), avec lequel un conducteur de véhicule est guidé, par édition d'informations de pilotage sur l'unité de sortie (3, 4), graphique et/ou acoustique, le long d'un itinéraire planifié auparavant, où l'unité de calcul (1) modifie le genre de la représentation des informations de pilotage en fonction d'un schéma de situation de conduite (10) déterminé par le système, où le schéma de situation de conduite (10) tient compte de l'état actuel du véhicule (12) et de l'environnement du véhicule (13), ainsi que du comportement du conducteur (14), **caractérisé par le fait que** l'unité de calcul (1) édite les informations de pilotage selon un plan de représentation (15), qui peut être sélectionné parmi plusieurs plans de représentation et qui est **caractérisé par** un paramètre primaire, en fonction duquel l'unité de calcul (1) procède à une modification principale de la représentation, où l'un des plusieurs plans de représentation est un plan de représentation graphique orienté vers la densité des informations avec, en tant que paramètre primaire, le nombre de points marquants de l'itinéraire se trouvant devant le véhicule.
